# EUROPEAN PATENT SPECIFICATION

(11) **EP 0 497 774 B1**
(45) Date of publication and mention of the grant of the patent: **22.03.1995**
(21) Application number: 90912013.1
(22) Date of filing: 20.08.1990
(51) Int. Cl.: F24F 3/00, F24F 5/00

(54) **A METHOD OF AND AN ARRANGEMENT FOR COOLING A BUILDING**
VERFAHREN UND ANORDNUNG ZUR KÜHLUNG EINES GEBÄUDES
PROCEDE ET AGENCEMENT DESTINES A REFROIDIR UN BATIMENT

(30) Priority: 22.08.1989 FI 893934
(43) Date of publication of application: 12.08.1992
(73) Proprietor: ABB FLÄKT AKTIEBOLAG, S-131 01 Nacka (SE)
(72) Inventor: LESKINEN, Seppo, Juhani, / / (FI); ROLIN, Ingmar, Erik, SF-02730 Espoo (FI)
(74) Representative: Füchsle, Klaus, Dipl.-Ing.
(86) International application number: FI9000200
(87) International publication number: WO9102927

## Description

This invention relates on the one hand to a method of cooling a building, in which method supply air to be introduced into spaces to be cooled in the building is cooled by direct or indirect evaporative cooling by evaporating water into the air to decrease the temperature and on the other hand to a cooling arrangement for a building for carrying out the method according to claim 1.

Buildings are today generally cooled by means of compressor aggregates operating on the heat pump principle and developed for a hot humid climate. The produced cooling power is transferred by a medium such as air or water into the different parts of the building. These systems are complicated and thus expensive and sensitive to operational disturbances. To prevent the acquisition costs from rising unreasonably high, such systems have to be dimensioned for a great air temperature difference. As a result, the air is cooled below the so-called dew point, whereby water is condensed from the air. The released evaporation heat consumes cooling power. These systems are therefore relatively disadvantageous also in view of the consumption of energy in the temperate zones, where the air is relatively dry and therefore would not require drying to achieve the cooling effect. In the tropics, the human temperature feeling is largely based on the high humidity of the air, so that it is necessary to decrease the humidity.

Due to the high investment and operating costs and the sensitivity to operational disturbances, mechanical cooling has not gained any greater popularity in the temperate and cold zones even though it has been generally realized that mechanical cooling has a favourable effect on job satisfaction and work efficiency. In Finland, for instance, only about 5% of new buildings are provided with mechanical cooling.

Halogenated hydrocarbons, so-called freons, are today commonly used as coolants in cooling aggregates. In recent years, it has been found that freons destroy the ozone layer of the atmosphere, and international agreements have been made to restrict their use. There exists substitutive coolants, such as carbon dioxide and ammonia, and new ones are being developed. However, they all raise the price of the cooling aggregate from the present level, which is already too high, in addition to which they impair the energy economy of the cooling.

Attempts have been made to solve the problem by substitutive cooling methods. The most widely known among these is the indirect evaporative cooling described, for instance, in Finnish Published Specification 67259, Finnish Patent Specification 57478 or SE-B- 460 151. In the known method, water is evaporated into the exhaust air or into the outdoor air, whereby the temperature of the air decreases and the humidity increases. The cooled air, which usually is too humid to be used directly, is used for cooling the supply air of the cooling plant. The cooling utilizes heat recovery means usually included in the air-conditioning system for wintertime use. The costs and energy consumption are only a fraction of those caused by compressor cooling, and the system does not use freon. Direct evaporative cooling has also been used to some extent, in which outdoor air is cooled by humidifying it and then directly used as supply air.

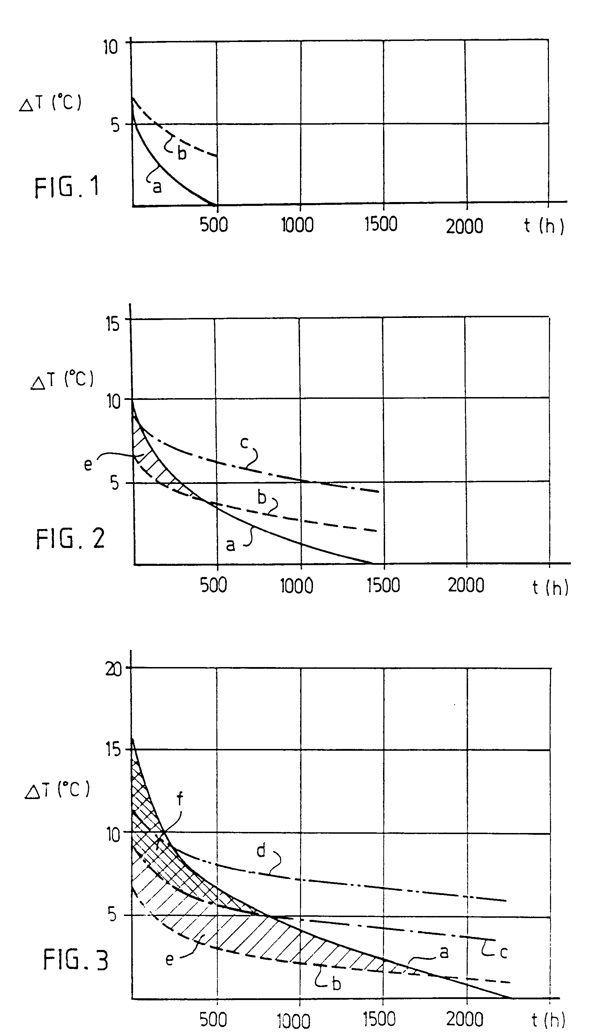

A drawback of these methods is that their cooling power is limited. Air can be cooled by humidifying only up to the saturation point of steam, in Finland, to about 20°C. This is sufficient in buildings having a small thermal load or a large flow of supply air. The curve a in Figure 1 of the drawings illustrates the cooling demand of air in this kind of building, while the curve b illustrates the cooling power to be obtained by indirect evaporative cooling.

In "normal" buildings, the power is not sufficient with "normal" air flows at maximum outdoor temperatures, and the indoor temperature starts to slide and exceeds the design value. For the most time the slide is rather small. It is significant only during a few hot day In Figure 2, the curve a illustrates the cooling demand; the curve b illustrates the power to be obtained; and the hatched area e therebetween illustrates the undersupply of power.

In buildings having a high thermal load or in cases where the flow of outdoor air is exceptionally small, the cooling power is inadequate for a relatively long period of time. It covers only about one half of the total cooling demand. In Figure 3, the curve a illustrates the cooling demand of this kind of building; the curve b illustrates the power to the obtained; and the hatched area e therebetween illustrates the undersupply of power.

In US-A-4 132 263 a fireplace heating and cooling system is disclosed comprising a water circulation system provided with a three-way valve, a heat sink, a pump and a water reservoir including heat exchanger elements. The three-way valve has ports which are selectively connectable either to ports connected to a tap water network or to ports connected to the heat sink. When household cooling is desired the valve means can be set at positions connecting a heat exchanger coil in the heat sink to the water reservoir. With the pump operating to circulate the water in the heat exchanger coil through the water reservoir the temperature of the water contained in the water reservoir is reduced. Thus, as air driven through a plenum over the heat exchanger elements, heat is extracted from the air and absorbed by the water in the water reservoir, thereby cooling the air for distribution in the household central air circulating system. Hence, it is clearly stated that during summer time the heat exchange circuit is cut-off from the tap water network. Consequently, this reference does not reveal or suggest the use of cold water supplied to a tap water network of a building for cooling purposes.

The object of the present invention is to provide a cooling method which avoids these drawbacks and enables the humidifying cooling used for the cooling of the supply air to be complemented with additional cooling in such a way that the cooling power is sufficient in all conditions, in addition to which the energy required by the additional cooling is practically speaking free of cost. This object is achieved by means of a method according to claim 1 which is characterized in that the supply air is additionally cooled by cool tap water for the building before the water is distributed into a tap water network provided in the building.

The invention is based on the idea that the tap water for the building is utilized as an additional cooling medium. Water is used in nearly all buildings. On reaching the building, the temperature of water is usually no more than 10°C. At most points of use (such as a toilet) it is of no importance how warm the tap water is; for many uses, cold water has to be warmed up (washing water, warm tap water, industrial process waters). Accordingly, the tap water temperature can be slightly raised without causing problems, when it is utilized for additional cooling of the supply air. The additional cooling does not consume any extra energy as the savings obtained by the preheating of tap water certainly cover the power losses caused by the power consumption of the pumping of tap water and the additional resistance created for the air flow by the cooling radiator.

The invention is also concerned with a cooling arrangement for a building for carrying out the method according to claim 1, the arrangement comprising an evaporative cooling device for cooling supply air to be introduced into spaces to be cooled in the building by evaporating water into the air. The cooling arrangement is characterized by a heat exchanger connected by an inlet pipe and a discharge pipe to a cool tap water pipe of the building before the water is distributed into a tap water network of the building, the supply air being arranged to flow through said heat exchanger for cooling the air by means of cool tap water.

The cooling arrangement is simple and has advantageous acquisition costs, as it can utilize the heating radiator, circulating water pump and adjusting means always included in all air-conditioning systems for heating the supply air in winter.

In the following the invention will be described in greater detail with reference to the attached drawings, wherein
Figure 1 shows a set of curves which illustrates the cooling power to be obtained by indirect evaporative cooling with respect to the cooling demand of the supply air of the building with a small thermal load;
Figure 2 shows a similar set of curves for the peak values of the outdoor temperature;
Figure 3 shows a similar set of curves with a high thermal load;
Figure 4 illustrates schematically a first embodiment of the cooling arrangement of the invention, in which the cooling radiator of the air-conditioning system is used as a heat exchanger for the tap water;
Figure 5 illustrates schematically a second embodiment of the cooling arrangement of the invention, in which the heating radiator of the air-conditioning system and an additional heat exchanger are used as a heat exchanger for the tap water; and
Figure 6 illustrates schematically a third embodiment of the cooling arrangement of the invertion, in which the heat exchanger for the tap water is complemented with a tap water storage unit.

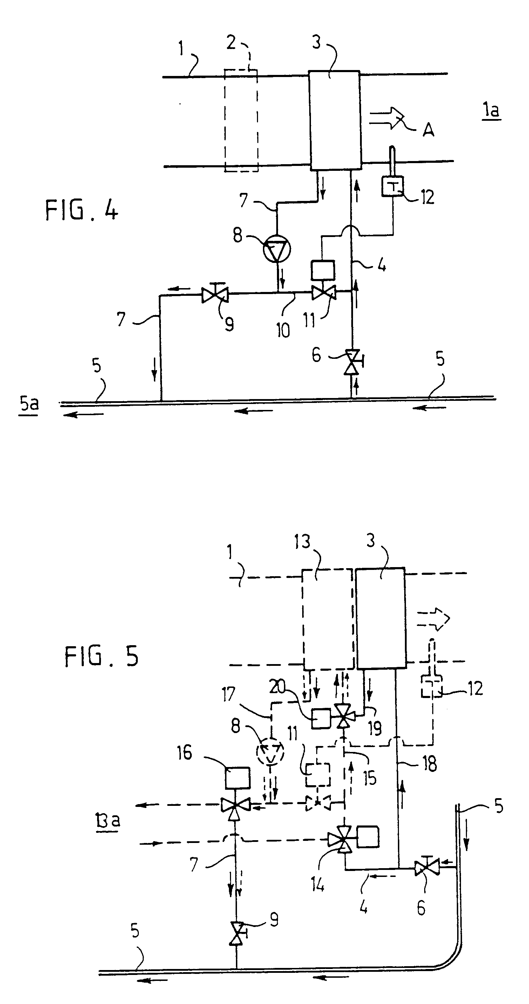

The cooling arrangement shown in Figure 4 of the drawings comprises an inlet duct 1 for outdoor air A to be introduced into cooled spaces la of a building. The outdoor air is cooled in a manner known per se by direct or indirect evaporation in a cooling device 2. The inlet duct is provided with a cooling radiator 3 acting as a heat exchanger, a pipe 4 connecting the inlet side of the radiator to a tap water pipe 5 of the building by means of a stop valve 6. The discharge side of the radiator is connected with a pipe 7 to the tap water pipe by means of a circulating water pump 8 and a stop valve 9. The inlet and discharge pipes of the radiator are interconnected by a connecting pipe 10 having a motor valve 11 the operation of which is controlled by a thermostat 12 positioned in the inlet duct. From the tap water pipe the tap water is passed into a tap water network 5a provided in the building.

When cooling by means of tap water is needed, the circulating water pump 8 is started and it starts to circulate tap water through the motor valve 11. The radiator cools the air flowing in the inlet duct. When the cooling demand is increased, the thermostat 12 starts to close the motor valve, whereby part of the circulating tap water is passed through the stop valve 9 into the tap water pipe and an equivalent amount of cold tap water flows from the tap water pipe through the stop valve 6 into the cooling radiator. With the maximum power demand, the motor valve is fully closed, so that the entire water amount of the circulating water pump is taken from the tap water pipe and returned into it at a point later in the direction of flow of the tap water before the water is distributed into the tap water network of the building. If the consumption of water at the points of use is thereby smaller than the water flow of the pump, the direction of flow may be reversed in the tap water pipe between the stop valves 6 and 9.

In this particular embodiment, part of the tap water is pumped through the cooling radiator 3 mounted in the air-conditioning system before the water is fed to the points of use. The tap water is thereby heated to a temperature between 15 and 18°C, depending on the dimensions, and the supply air is correspondingly cooled. In Figure 2, the curve c illustrates the improved cooling effect to be obtained by the additional cooling. The additional cooling power so obtained is sufficient to cover the undersupply e of cooling.

The embodiment of Figure 5 utilizes a heating radiator 13 connected to a heating network 13a, its circulating water pump 8 and adjusting means, that is, a motor valve 11 and a thermostat 12, which are always included in all air-conditioning systems. The heating radiator is connected on the inlet side with a pipe 15 and on the discharge side with a pipe 17 to the heating network through a magnet valve 14 and 16, respectively. The tap water pipe 5 is connected with the pipe 4 to the magnet valve 14 of the inlet pipe 15 of the heating radiator and with the pipe 7 to the magnet valve 16 of the discharge pipe 17 of the heating radiator. In Figure 5, the broken-line arrows illustrate the flow of cold water from the tap water pipe through the radiator 13 and back into the tap water pipe, so that the tap water cools the supply air flowing through the radiator. It is noted that if the power of the heating radiator 13 is sufficient for cooling the supply air, the only additional components needed are the two magnet valves 14, 16 and the stop valves 6, 9.

Figure 5 illustrates a case in which the power of the existing heating radiator 13 is not alone quite sufficient for the cooling purposes. To supply additional power, an additional heat exchanger 3 is connected in series with the radiator 13 after it. For the sake of clarity, the conventional parts of the heating means of the air-conditioning system are drawn by broken lines and the additional components required by the additional cooling with continuous lines. The additional heat exchanger 3 is connected by means of a pipe 18 to the branch pipe 4 of the tap water pipe and by means of a pipe 19 and a magnet valve 20 to the inlet side of the heating radiator 13. The heating network is disconnected and the tap water network is connected in operation by means of the above-mentioned three magnet valves 14, 16, 20. The flow of cold tap water from the tap water pipe through the radiators 3, 13 and back to the tap water pipe is shown by arrows drawn by continuous lines.

If the cooling demand of the building is great, and the consumption of tap water is normal, the additional cooling power achieved by means of the embodiment of Figure 5, illustrated by the curve c in Figure 3, is not yet sufficient. The cross-hatched area f between the curves a and c illustrates the undersupply of power. However, the undersupply of power during one day and night is restricted to a few hours in the afternoon when the outdoor temperature is high.

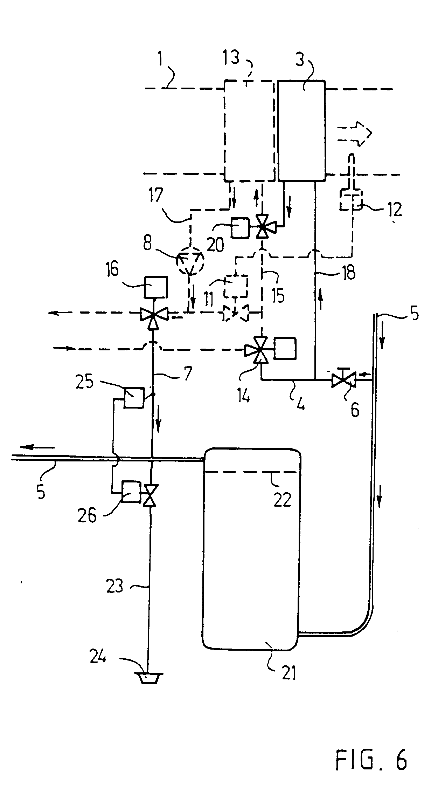

Figure 6 shows an embodiment by means of which the cooling power can be further increased. The cooling arrangement of Figure 5 is provided with a storage unit 21 which accumulates tap water to be consumed during one day and night. By dimensioning the circulating water pump 8 in accordance with the maximum consumption of cooling power, the power obtained from the storage unit 21, illustrated by the curve d in Figure 3, may, for a short period of time, be twice as high as the average water consumption. For the sake of clarity, the curve d is drawn visible over its entire length, although the power represented by it is used only in the cross-hatched area defined between the curves c, a and d. A greater power consumption would not even be possible, as the available power reserve consists of the unhatched area between the curves a and c, from which convection and mixing losses are subtracted. The mixing losses can be substantially decreased by providing the storage unit with a flow equalizer, such as an intermediate floor 22 made of perforated sheet, shown in Figure 6. The direction of flow in the pipes connected to the storage unit may be reversed depending on whether power is derived from the storage unit or whether power is fed into the unit. The dimensioning of the circulating water pump 8 in accordance with the maximum consumption has another advantage in that when the consumption is low, the temperature of the return water rises to a value higher than the design value, 15 to 17 degrees. The demand of tap water is thereby decreased when the thermal load is small, and a greater cooling power reserve is available for the maximum load. This has not been taken into account in the curve d.

In its details, the cooling method of the invention and the cooling arrangements for realizing the method may vary within the scope of the attached claims.

In Figures 4 to 6, the heat exchanger 3 is connected to an air-conditioning means. The cooling may, of course, be effected by any other systems known per se, e.g. in after-cooling radiators positioned in the duct system, in convectors or in radiation coolers provided for individual rooms or zones. The use of devices positioned in room spaces is particularly advantageous in the system, as the return temperature of the tap water may thereby vary between 19 and 22 degrees instead of 15 and 17 degrees. This increases considerably the amount of cooling power free of cost and hence the cool tap coater can be used not only for cooling purposes according to the invention but for other purposes as well.

## Claims

1. A method of cooling a building, in which method supply air (A) to be introduced into spaces (1a) to be cooled in the building is cooled (2) by direct or indirect evaporative cooling (2) by evaporating water into the air to decrease the temperature, **characterized** in that the supply air (A) is additionally cooled (3; 13) by cool tap water (5) before the water is distributed into a tap water network (5a) provided in the building.

2. A cooling arrangement for a building for carrying out the method according to claim 1, comprising an evaporative cooling device (2) for cooling supply air (A) to be introduced into spaces (la) to be cooled in the building by evaporating water into the air, **characterized** by a heat exchanger (3; 13) connected by an inlet pipe (4) and a discharge pipe (7) to a cool tap water pipe (5) of the building before the water is distributed into a tap water network (5a) of the building, the supply air (A) being arranged to flow through said heat exchanger for cooling the air by means of cool tap water.

3. A cooling arrangement according to claim 2, **characterized** in that the heat exchanger for the tap water is a heating radiator (13) included in an air-conditioning system of the building for heating the supply air (A) in the wintertime, said heating radiator being provided with valves (14, 16) for connecting the heating radiator (13) to the tap water pipe (5) of the building.

4. A cooling arrangement according to claim 3, **characterized** by an additional heat exchanger (3) mounted in a supply air duct (1) in series with the heating radiator (13) after it in the direction of flow of the supply air (A), said additional heat exchanger being connected to the tap water pipe (5).

5. A cooling arrangement according to claim 3 or 4, **characterized** by a cold tap water storage unit (21) which is connected to the tap water pipe (5) and from which tap water is arranged to be pumped into the heating radiator (13) and/or to the additional heat exchanger (3) during the maximum consumption of cooling power.

6. A cooling arrangement according to claim 5, **characterized** in that the storage unit (21) is provided with a flow equalizer (22) to decrease mixing losses.

## Patentansprüche

1. Verfahren zum Kühlen eines Gebäudes, bei welchem in zu kühlende Räume (1a) im Gebäude einzuleitende Versorgungsluft (A) gekühlt wird (2) durch direkte oder indirekte Verdampfungskühlung (2) durch das Verdampfen von Wasser in die Luft, um die Temperatur abzusenken,
dadurch **gekennzeichnet**,
daß die Versorgungsluft (A) zusätzlich gekühlt wird (3; 13) durch kaltes Leitungswasser (5), bevor das Wasser in ein im Gebäude vorgesehenes Leitungswassernetz (5a) eingeleitet wird.

2. Kühlanordnung für ein Gebäude zum Durchführen des Verfahrens gemäß Anspruch 1 mit einer Verdampfungskühlvorrichtung (2) zum Kühlen von Versorgungsluft (A), die in zu kühlende Räume (1a) im Gebäude einzuleiten ist, durch Verdampfen von Wasser in die Luft, gekennzeichnet durch einen Wärmetauscher (3; 13), der durch eine Einlaßleitung (4) und eine Auslaßleitung (7) mit einer kalten Leitungswasserleitung (5) des Gebäudes verbunden ist, bevor das Wasser in ein Leitungswassernetz (5a) des Gebäudes eingeleitet wird, wobei die Versorgungsluft (A) durch den Wärmetauscher zum Kühlen der Luft mittels kalten Leitungswassers geleitet wird.

3. Kühlanordnung nach Anspruch 2,
dadurch **gekennzeichnet**,
daß der Wärmetauscher für das Leitungswasser ein Heizradiator (13) ist, der in einem Klimaanlagensystem des Gebäudes zum Heizen der Versorgungsluft (A) im Winter enthalten ist, wobei der Heizradiator mit Ventilen (14, 16) zum Verbinden des Heizradiators (13) mit der Leitungswasserleitung (5) des Gebäudes versehen ist.

4. Kühlanordnung nach Anspruch 3, gekennzeichnet durch einen zusätzlichen Wärmetauscher (3), der in einem Versorgungsluftkanal (1) in Serie mit dem Heizradiator (13) nach diesem in Strömungsrichtung der Versorgungsluft (A) angebracht ist, wobei der zusätzliche Wärmetauscher mit der Leitungswasserleitung (5) verbunden ist.

5. Kühlanordnung nach Anspruch 3 oder 4, gekennzeichnet durch eine Kalt-Leitungswasserspeichereinheit (21), welche mit der Leitungswasserleitung (5) verbunden ist und aus welcher Leitungswasser in den Heizradiator (13) und/oder den zusätzlichen Wärmetauscher (3) während des maximalen Verbrauchs an Kühlleistung gepumpt wird.

6. Kühlanordnung nach Anspruch 5,
dadurch **gekennzeichnet**,
daß die Speichereinheit (21) mit einem Strömungsausgleicher (22) versehen ist, um Mischverluste zu verringern.

## Revendications

1. Procédé pour rafraîchir un bâtiment, dans lequel l'air d'alimentation (A) que l'on doit introduire dans les espaces (1a) à refroidir dans le bâtiment, est refroidi (2) par refroidissement évaporatif (2) direct ou indirect en évaporant de l'eau dans l'air pour réduire la température, caractérisé en ce que l'air d'alimentation (1) est additionnellement refroidi (3 ; 13) par de l'eau courante fraîche (5) avant que l'eau ne soit distribuée dans un réseau d'eau courante (5a) prévu dans le bâtiment.

2. Installation de refroidissement pour un bâtiment, pour la mise en oeuvre du procédé selon la revendication 1, comprenant un appareil de refroidissement évaporatif (2) pour refroidir de l'air d'alimentation (A) qui doit être introduit dans des espaces (1a) à refroidir dans le bâtiment, en évaporant de l'eau dans l'air, caractérisée en ce qu'elle comprend un échangeur de chaleur (3 ; 13) raccordé par un tube d'entrée (4) et un tube de sortie (7) à un tuyau d'eau courante fraîche (5) du bâtiment avant que l'eau ne soit distribuée dans un réseau d'eau courante (5a) du bâtiment, l'air d'alimentation (A) étant amené à s'écouler à travers ledit échangeur de chaleur afin de refroidir l'air au moyen de l'eau courante fraîche.

3. Installation de refroidissement selon la revendication 2, caractérisée en ce que l'échangeur de chaleur pour l'eau courante est un radiateur de chauffage (13) compris dans un système de conditionnement d'air du bâtiment pour réchauffer l'air (A) en hiver, ledit radiateur de chauffage étant pourvu de valves (14, 16) pour le raccordement du radiateur de chauffage (13) au tube d'eau courante (5) du bâtiment.

4. Installation de refroidissement selon la revendication 3, caractérisée en ce qu'elle comprend un échangeur de chaleur additionnel (3) monté dans une gaine d'alimentation d'air (1) en série avec le radiateur de chauffage (13) et après celui-ci dans la direction d'écoulement de l'air (A), ledit échangeur de chaleur additionnel étant raccordé au tube d'eau courante (5).

5. Installation de refroidissement selon l'une ou l'autre des revendications 3 et 4, caractérisée en ce qu'elle comprend une unité de stockage (21) d'eau courante fraîche, qui est raccordée au tube d'eau courante (5), et à partir de laquelle l'eau courante est pompée dans le radiateur de chauffage (13) et/ou vers l'échangeur de chaleur additionnel (3) pendant la consommation maximum de puissance de refroidissement.

6. Installation de refroidissement selon la revendication 5, caractérisée en ce que l'unité de stockage (21) est pourvue d'un égaliseur de flux (22) afin de réduire les pertes par mélange.
